# EUROPÄISCHE PATENTSCHRIFT

(11) **EP 1 752 425 B1**
(45) Veröffentlichungstag und Bekanntmachung des Hinweises auf die Patenterteilung: **07.12.2011**
(21) Anmeldenummer: 06013857.5
(22) Anmeldetag: 01.10.2002
(51) Int. Cl.: C03B 33/03, C03B 33/07, C03B 33/027, B65G 49/06

(54) **Verbundglasschneidanlage sowie Verfahren zum Positionieren einer Verbundglastafel in einer Verbundglasschneidanlage**
Apparatus to cut laminated glass and method for positioning laminated glass to be cut
Dispositif de découpe de verre feuilleté et procédé pour positionner de verre feuilleté à découper

(30) Priorität: 26.11.2001 DE 10157833
(43) Veröffentlichungstag der Anmeldung: 14.02.2007
(62) Teilanmeldung aus: 02021894.7
(73) Patentinhaber: HEGLA GmbH & Co. KG, 37688 Beverungen (DE)
(72) Erfinder: Vollbracht, Manfred, 37688 Beverungen (DE); Rotermund, Christian, 37671 Höxter (DE)
(74) Vertreter: Solf, Alexander

(56) Entgegenhaltungen:
- EP-A- 0 835 847
- EP-A- 1 118 592
- EP-A2- 0 807 609
- DE-A1- 4 234 536
- DE-C1- 19 822 282

## Beschreibung

Die Erfindung betrifft eine Verbundglasschneidanlage nach dem Oberbegriff des Anspruchs 1 und ein Verfahren zum Positionieren einer Verbundglastafel auf einem Auflagetisch der Verbundglasschneidanlage.

Unter Verbundglas versteht man eine aus zwei Glasplatten ausgebildete Scheibe, wobei eine erste innere Platte aus einem üblicherweise unbeschichteten Glas besteht und eine zweite äußere Platte aus einem insbesondere beschichteten, insbesondere mit einer Wärmeschutzschicht versehenen Glas besteht. Die beiden Glasplatten sind mit einer Folie miteinander verklebt.

Um zwei derart miteinander verbundene Rohglasplatten in gebrauchsfähige Formate zu zerschneiden, werden Verbundglasschneidanlagen verwendet.

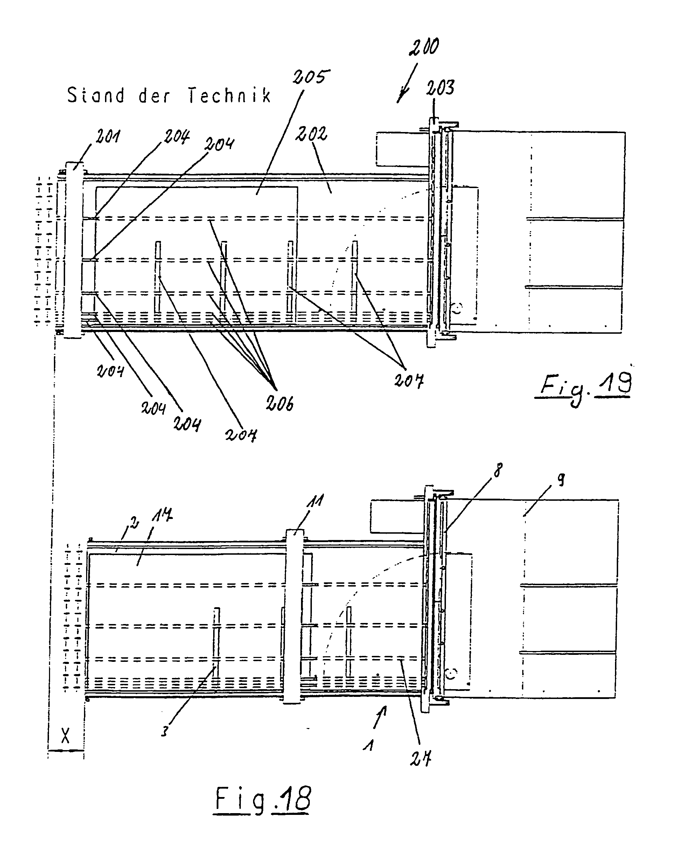

Eine bekannte Verbundglasschneidanlage 200 (Fig. 19) besitzt eine Verfahrbrücke 201, einen Auflagetisch 202 sowie eine Schneidbrücke 203. An der Verfahrbrücke 201 sind zur Schneidbrücke 203 hin Greifer 204 angeordnet, deren Greifermaul eine Verbundglasscheibe 205 klemmen kann. Da die Scheibe 205 auf dem Auflagetisch 202 aufliegt, müssen untere Klemmbacken der Greifer 204 in Nuten 206 im Auflagetisch 202 laufen. Mit den Greifern 204 kann die Scheibe 205, nachdem sie mit geeigneten Transportmitteln wie Transportrollen oder Transportbändern auf den Auflagetisch 202 gefördert wurde oder manuell mit Aufstellarmen 207 aufgelegt wurde, gegriffen und auf die Schneidbrücke 203 hingeschoben werden.

Eine derartige Verbundglasschneidanlage ist beispielsweise auch aus der DE 32 30 554 A1 bekannt. Nach dem Schneiden bzw. Ritzen mit einer Schneidbrücke werden die Glasscheiben entlang der Ritzlinie geknickt, um einen durchgehenden Riss im Bereich der Ritzlinie zu erzeugen. Anschließend oder dabei werden die Glasplatten auseinandergezogen und die Folie im Spalt durch Hitzeeinwirkung abgeschmolzen bzw. getrennt. Bei derartigen bekannten Verbundglasschneidanlagen ist von Nachteil, dass sie neben einer erheblichen Baulänge eine aufwendige Transporttechnik erfordern, wobei die Verbundglasscheiben nur entlang gerader Linien parallel zu den Tischkanten bzw. Glaskanten schneidbar und trennbar sind.

Die EP 1 118 592 A1 offenbart zudem eine Vorrichtung zum Schneiden einer Verbundglastafel mit einem Auflagetisch zum Auflegen von Verbundglastafeln und einer Verbundglasschneideinrichtung mit Schneidwerkzeugen zum Schneiden oder Ritzen der Verbundglastafel sowie mit einer über dem Auflagetisch zur Verbundglasschneideinrichtung gegenläufig hin- und zurückfahrbar angeordneten Positionierbrücke zum Verschieben und Positionieren der Verbundglastafel auf dem Auflagetisch. Die Positionierbrücke weist zudem eine Greifeinrichtung mit einem Sauggreifer auf, der einen Saugkappen-Typ-Greifkopf mit Saugnoppen zum Greifen der Scheibe von oben und einen Schenkel aufweist. Der Sauggreifer ist um eine Achse, die senkrecht zur Auflagetischebene ist, drehbar und entlang dieser Achse auf die Verbundglastafel zu und von dieser weg verfahrbar. Der Sauggreifer der EP 1 181 592 A1 dient dazu, die Glastafel um die Drehachse des Sauggreifers zu drehen, wozu der Sauggreifer von oben auf eine Oberseite der zu drehenden Glastafel gedrückt wird und diese mittels ansaugen greift.

Aufgabe der Erfindung ist es, eine Verbundglasschneidanlage zu schaffen, die kürzer und bezüglich der Transporttechnik einfacher aufgebaut ist und mit der vorzugsweise beliebige Schnitte ausgeführt werden können. Weitere Aufgabe ist die Bereitstellung eines einfachen Verfahrens zum Positionieren einer Verbundglastafel innerhalb der Verbundglasschneidanlage.

Die Aufgaben werden mit einer Verbundglasschneidanlage mit den Merkmalen des Anspruchs 1 und einem Verfahren mit den Merkmalen des Anspruchs 13 gelöst. Vorteilhafte Weiterbildungen sind in den jeweils abhängigen Unteransprüchen gekennzeichnet.

Mittels der Vorrichtung gemäß Anspruch 1 können die Glasplatten sowohl gezogen als auch geschoben werden. Hierdurch ergibt sich in überraschender Weise eine signifikante Verkürzung der Baulänge. Ferner kann eine Glasplatte aktiv auf den Auflagetisch gezogen werden, so dass vorgeschaltete Transporteinrichtungen vereinfacht oder weggelassen werden können. Ferner wird eine genauere Positionierung und Kantenparallelität erzielt.

Nach einer bevorzugten Ausführungsform ist ferner vorgesehen, die Schneid- bzw. Ritzeinrichtungen an der Schneidbrücke drehbar und entlang der Schneidbrücke verfahrbar auszubilden. In Verbindung mit der Positionierbrücke sind hiermit beliebige, auch runde oder gekrümmte Schnitte möglich. Dies insbesondere auch automatisiert rechnergesteuert.

Die Erfindung wird anhand einer Zeichnung beispielhaft näher erläutert. Es zeigen dabei:
- Fig. 1: einen Doppelgreifer an einer verfahrbaren Positio- nierbrücke in einer schematischen Seitenansicht;

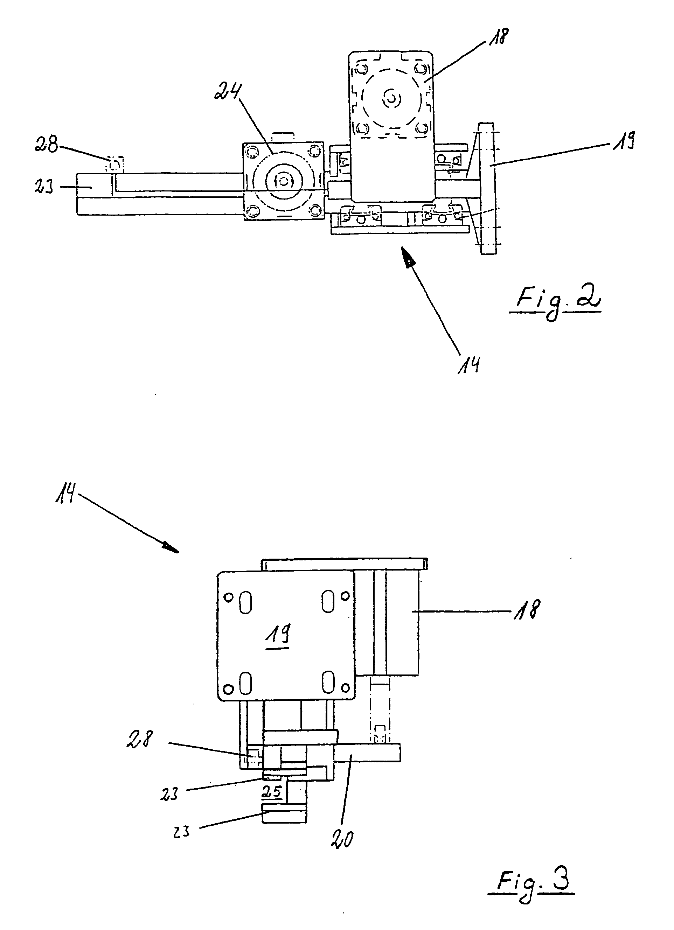

- Fig. 2: einen Doppelgreifer nach Fig. 1 in einer schemati- schen Draufsicht;
- Fig. 3: einen Doppelgreifer nach Fig. 1 in einer schemati- schen brückenseitigen Ansicht normal zu den Ansichten nach Fig. 1 und 2;
- Fig. 4: eine Verbundglasschneidanlage mit Doppelgreifern in einer schematisierten Draufsicht, wobei eine Glasta- fel mittels vorderer Greifer geschoben wird;
- Fig. 5: eine Verbundglasschneidanlage mit Doppelgreifern in einer Draufsicht mit einer auf die Aufstellarme auf- gelegten Glasplatte;
- Fig. 6: eine Verbundglasschneidanlage nach Fig. 5 mit einer in einer ersten Schneidposition verfahrenen Scheibe oder Platte;
- Fig. 7: eine Verbundglasschneidanlage nach Fig. 5 mit einer durch die Positionierbrücke zurückgezogenen geschnit-tenen Platte, wobei ein abgeschnittenes Plattenstück hinter der Schneidbrücke verbleibt;

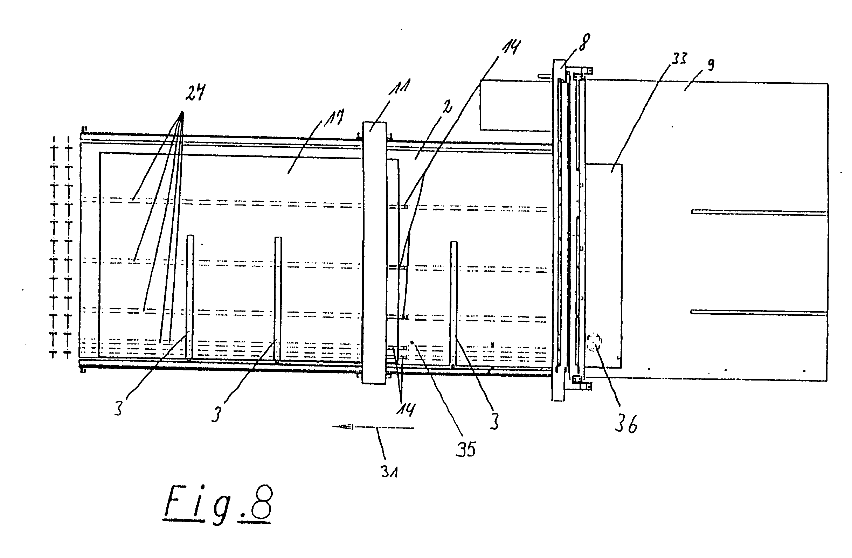

- Fig. 8: die Verbundglasschneidanlage nach Fig. 7, wobei die Positionierbrücke über die Scheibe gefahren und die Scheibe mit rückwärtigen Greifern geklemmt und von der Schneidbrücke weggeschoben wird;
- Fig. 9: eine Verbundglasschneidanlage nach Fig. 8, bei der die geschnittenen Plattenteile mittels einer Drehung zum weiteren Schneiden um 90° gedreht werden;
- Fig. 10: eine Verbundglasschneidanlage nach Fig. 9 nach erfolgtem Schnitt, wobei die Positionierbrücke die kleine Glastafel für den nächsten Schnitt positioniert;
- Fig. 11: eine Verbundglasschneidanlage nach Fig. 10, wobei die große Glastafel für den nächsten Schnitt mit hinteren Greifern vorgezogen wird;
- Fig. 12: eine Verbundglasschneidanlage nach Fig. 11, wobei die Glastafel von der Positionierbrücke überfahren und dann geschoben wird;

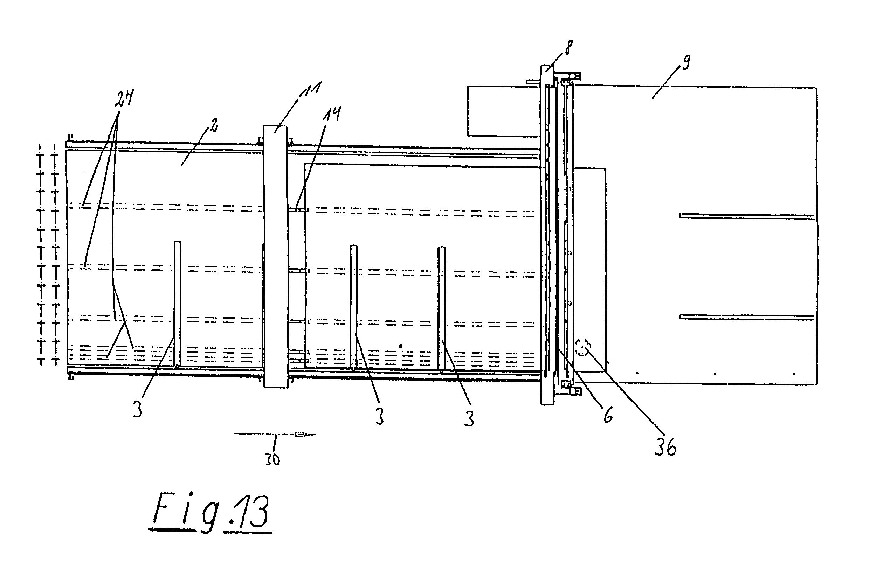

- Fig. 13: eine Verbundglasschneidanlage nach Fig. 12 mit einer in Schneidposition geschobenen großen Glastafel;

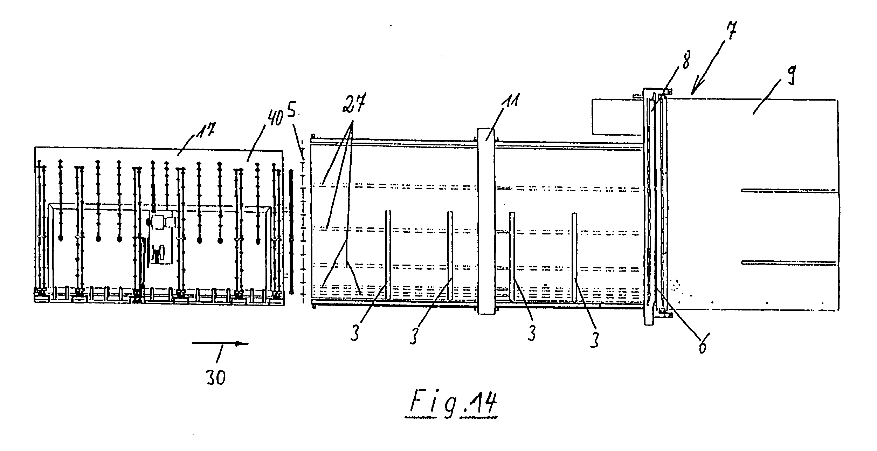

- Fig. 14: eine Verbundglasschneidanlage nach Fig. 4 mit einem vorgeschalteten Beschicker;

- Fig. 15: die Verbundglasschneidanlage nach Fig. 14 mit einer teilweise auf den Auflagetisch geförderten Glasplatte;
- Fig. 16: die Verbundglasschneidanlage nach Fig. 15, wobei die Glasplatte von der Positionierbrücke gegriffen ist;
- Fig. 17: die Verbundglasschneidanlage nach Fig. 16, wobei die Glasplatte von der Positionierbrücke zur Schneidbrücke vom Beschicker gezogen wird;
- Fig. 18: eine Verbundglasschneidanlage mit Doppelgreifern in einer Draufsicht für einen Vergleich der Baulänge;
- Fig. 19: eine Verbundglasschneidanlage nach dem Stand der Technik.

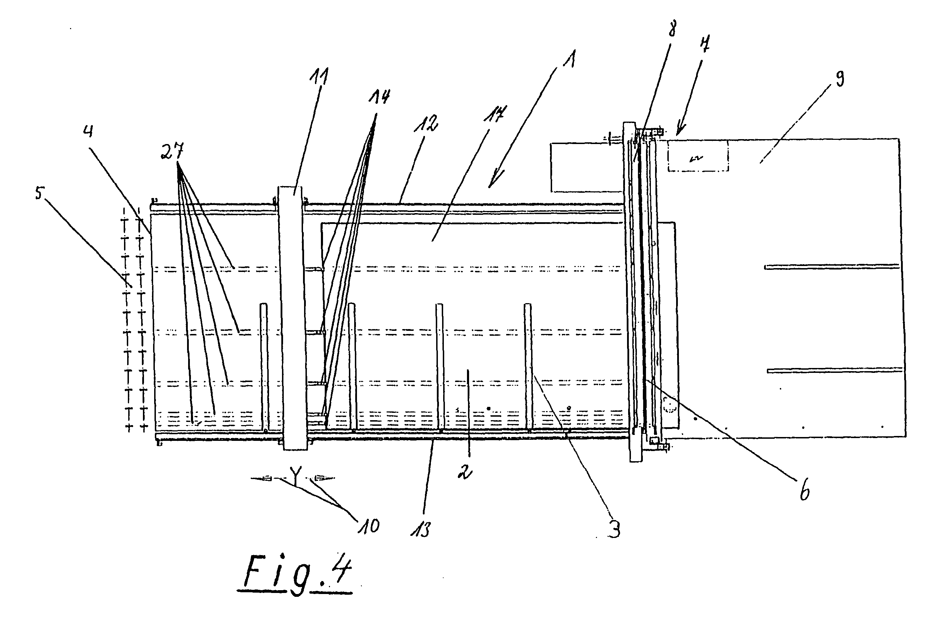

Eine für die Verwendung mit erfindungsgemäß um die Hochachse drehbaren Greifern geeignete Verbundglasschneidanlage 1 (Fig. 4) besitzt einen Luftkissenbrückentisch 2 mit an sich bekannten Aufstellarmen 3 für eine manuelle Beschickung. An einer Schmalseite bzw. Beschickungsseite 4 des Luftkissenbrückentisches 2 ist im Luftkissenbrückentisch 2 eine Beschickungseinheit (angedeutet) 5 vorhanden. An der gegenüberliegenden Schmalseite 6 (Schneidseite) ist eine Verbundglasschneideinrichtung 7 vorhanden. Die Verbundglasschneideinrichtung 7 besitzt eine über die Breite des Luftkissenbrückentisches 2 auf Höhe der Schmalseite 6 sich erstreckende Schneidbrücke 8 sowie einen Bearbeitungstisch 9, der mit einem Spalt (nicht gezeigt) an die Schmalseite 6 angesetzt ist. Zwischen der Schmalseite bzw. Beschickungsseite 4 und der Schneidbrücke 8 ist in Tischlängsrichtung (Y-Richtung) 10 eine Positionierbrücke 11 verfahrbar angeordnet. Die Positionierbrücke 11 überspannt den Luftkissenbrückentisch 2 und ist an dessen Längskanten 12, 13 verschieblich antreibbar gelagert.

An der Positionierbrücke 11 sind eine Mehrzahl von Greifeinrichtungen 14 ausgebildet. Die Greifeinrichtungen 14 sind bezüglich der Längserstreckung der Positionierbrücke 11 mit unregelmäßigen Abständen zueinander angeordnet, wobei zum Greifen von unterschiedlich breiten Glastafeln bzw. -platten 17 die Abstände zwischen den Greifeinrichtungen 14 von der Längskante 13 zur Längskante 12 hin weiter werden. Die Abstände zwischen den Greifeinrichtungen 14 sind insbesondere auf Standardformate abgestimmt.

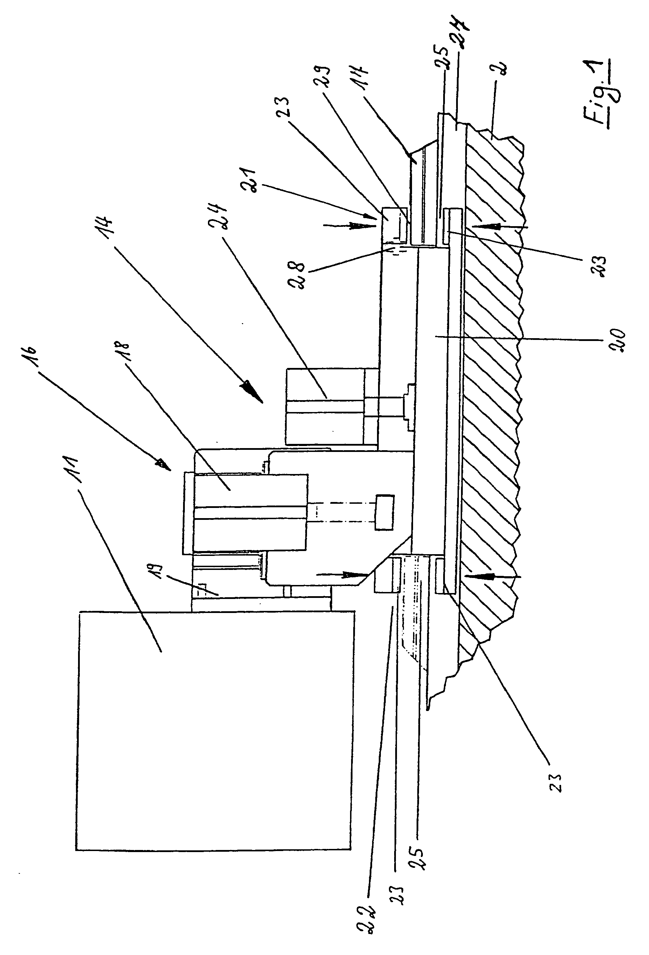

Die Greifeinrichtungen 14 (Fig. 1) sind an einer der Schneidbrücke 8 zugewandten Fläche oder Wandung 15 an der Positionierbrücke 11 angeordnet, insbesondere angeschraubt. Der Wandung 15 benachbart ist eine Hubeinrichtung 16 zum Anheben der Greifeinrichtung 14 über das Niveau einer Glastafel 17 vorhanden. Die Hubeinrichtung 16 ist beispielsweise eine mit einer pneumatischen Kolbenzylindereinheit 18 zwischen einer Befestigungseinrichtung 19 und der übrigen Greifeinrichtungen 14 angeordnete Hubeinrichtung 16.

Die Greifeinrichtung 14 weist einen länglichen Greiferträger 20 auf. Der Greiferträger 20 ist mit der Hubeinrichtung 16 anhebbar und absenkbar verbunden. An dem Greiferträger 20 einer auf dem Sachgebiet verwendeten Verbundglasschneidanlage sind endseitig Greifer 21, 22 mit Greifpratzen 23 ausgebildet, wobei ein Greifer 21 der Positionierbrücke 11 abgewandt ist und ein Greifer 22 der Positionierbrücke 11 zugewandt und schräg unterhalb von dieser angeordnet ist.

Die Greifer 21, 22 sind in an sich bekannter Weise ausgebildet und werden mit einer Betätigungseinrichtung 24, insbesondere einer Kolbenzylindereinheit 24 betätigt. Für jeden Greifer 21, 22 kann eine Betätigungseinrichtung 24 vorhanden sein, es können aber auch beide Greifer 21, 22 mit einer einzigen Betätigungseinrichtung 24 betätigt werden. Die Ausbildung und der Aufbau der einzelnen Greifer 21, 22 an sich entspricht dem des erfindungsgemäßen um die Hochachse drehbaren Greifers, wobei der Aufbau im Folgenden noch näher erläutert wird.

Zum Schließen und Öffnen der Greifmäuler 25 werden beide Pratzen 23 aufeinander zugefahren. Eine untere Pratze 23 befindet sich somit zwangsläufig unterhalb des Niveaus einer auf den Tisch 2 aufliegenden Scheibe. Der Tisch 2 besitzt entlang seiner Längserstreckung fluchtend mit der Bewegungsbahn der Greifereinrichtungen 14 Nuten 27. Benachbart zu den Greifern 21, 22 sind an der Greifeinrichtung 14 Sensoren 28 vorhanden. Die Sensoren 28 dienen der Erfassung einer definierten Greiftiefe. Die Greiftiefe ist dabei so bemessen, dass die Pratzen 23 eine Tafel 17 nur in entschichteten Randbereichen 29 greifen.

Im folgenden wird die Funktionsweise einer auf dem Sachgebiet verwendeten Vorrichtung mit Doppelgreifern erläutert:

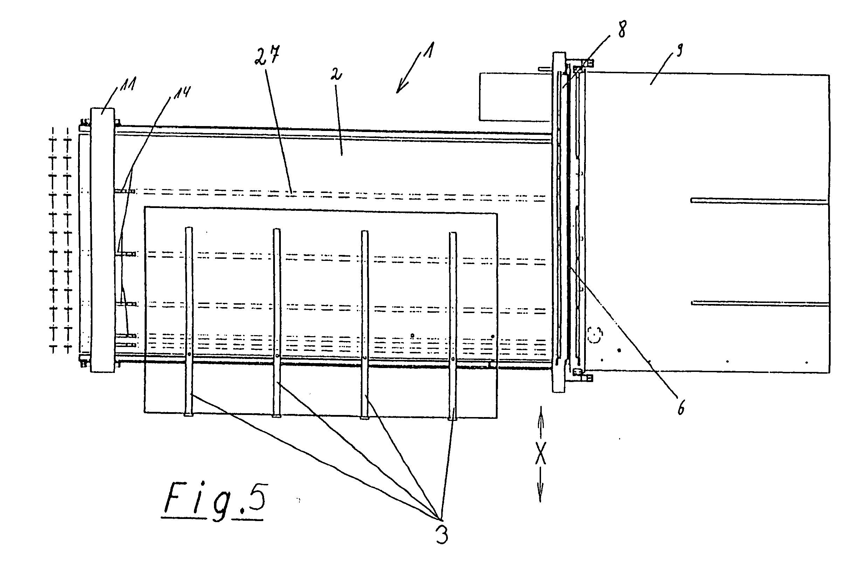

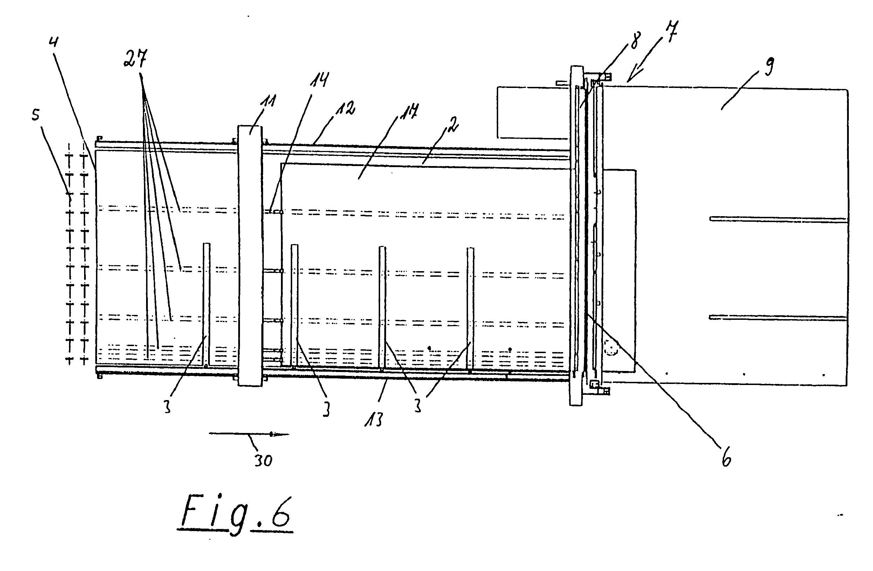

Eine Glastafel 17 kann über die Aufstellarme 3 (Fig. 5) auf den Luftkissenbrückentisch 2 aufgelegt werden, so dass die Glastafel 17 zwischen die Positionierbrücke 11 und die Schneidbrücke 8 gelangt. Die Glastafel 17 wird mit den vorderen Greifern 21 (Fig. 6) im entschichteten Randbereich gegriffen und entlang der Förderrichtung (Pfeil 30) unter die Schneidbrücke 8 gefördert, bis bezogen auf die Förderrichtung hinter der Schneidbrücke 8 eine Scheibenfläche zu liegen kommt, die einer abzuschneidenden Scheibenfläche entspricht.

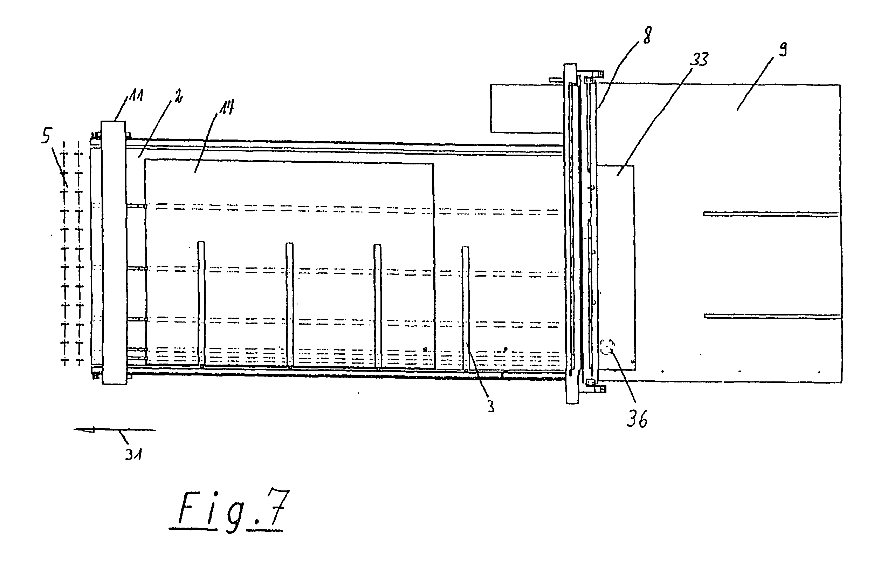

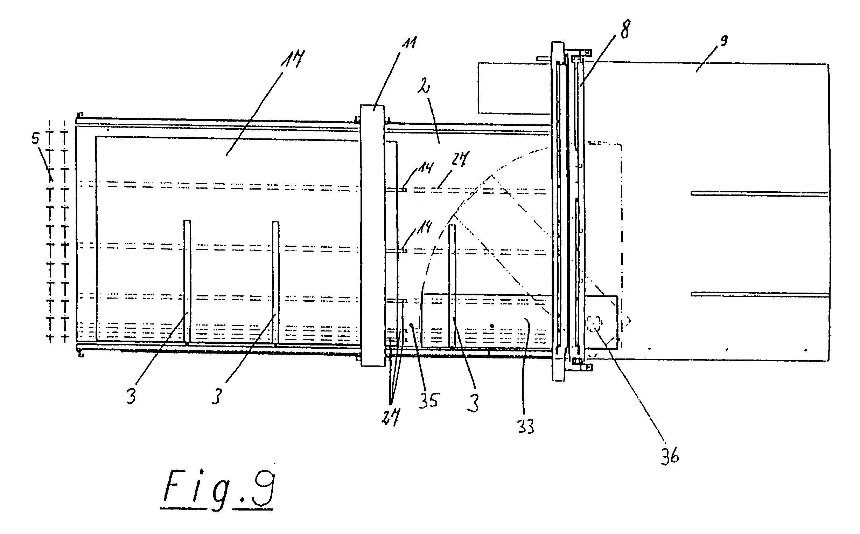

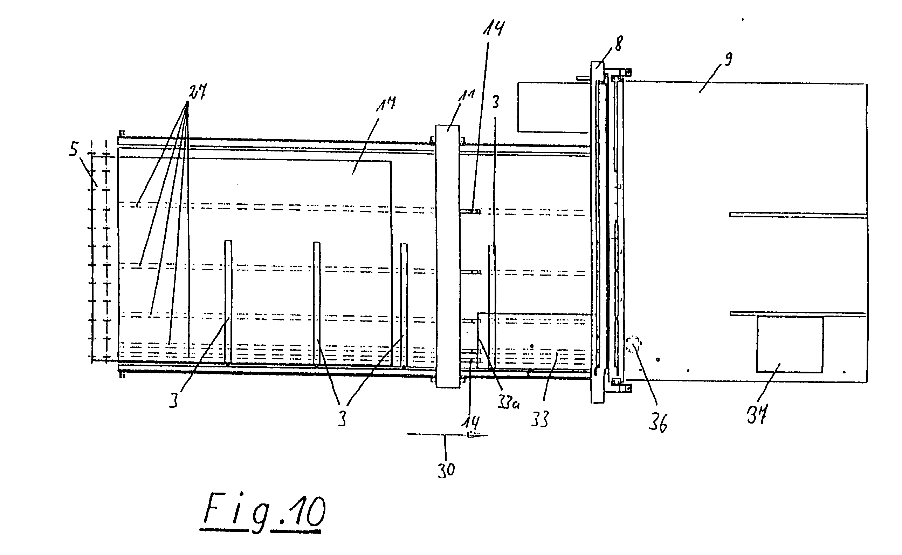

Nach dem Schneiden (Fig. 7) wird die Glasplatte von der Positionierbrücke und den immer noch an der Glastafel angreifenden vorderen Greifern 21 entgegen der Förderrichtung (Pfeil 31) von der Schneidbrücke 8 weggezogen. Gegenüberliegend von der Positionierbrücke 11 verbleibt ein geschnittener Glastafelabschnitt 33 auf dem Bearbeitungstisch 9. Für nachfolgende Schneidschritte an dem geschnittenen Glastafelabschnitt 33 muss die Glastafel 17 von der Schneidbrücke 8 weg verfahren werden, wobei in einem hinteren Anschlag der Positionierbrücke 11 (Fig. 7) die vorderen Greifer 21 die Glastafel 17 loslassen und anschließend über die Glastafel 17 auf die Schneidbrücke 8 zu verfahren werden, wobei die Greifer mit der Einrichtung 16 über die Glastafel 17 angehoben sind. Ist die Positionierbrücke 11 über die Glastafel 17 hinweggefahren, werden die Greifeinrichtungen 14 wieder in die Nuten 27 abgesenkt und die Glastafel 17 mit den rückwärtigen Greifern 22 in entschichteten Randbereichen gegriffen und weiter entlang der Gegenförderrichtung (Pfeil 31) von der Schneidbrücke 8 weggefördert, bis ein Sensor 35 frei wird. Um den geschnittenen Glastafelabschnitt 33 weiter zu zerteilen, wird er von einem Drehsaugteller 36 von unten angesaugt und anschließend um 90° unter der Schneidbrücke 8 hindurch auf den Luftkissenbrükentisch 2 gedreht (Fig. 9). Um den Glastafelabschnitt 33 in die jeweiligen Schneidpositionen zu fahren, um ihn in kleinere Tafeln oder Scheiben 37 zu zerteilen, wird die Glastafel 17 von den hinteren Greifern 22 losgelassen und die Positionierbrücke 11 auf den Glastafelabschnitt 33 zugefahren und mit einer Anzahl von Greifern 21 an seiner der Schneidbrücke 8 abgewandten Schmalseite 33a mit Greifern 21 gegriffen, wobei die Anzahl der Greifer 21 auf die Breite des Glastafelabschnitts 33 bzw. die Länge der Schmalseite 33a abgestimmt ist. Anschließend wird die Positionierbrücke mit dem Glastafelabschnitt 33 entlang der Förderrichtung 30 unter die Schneidbrücke 8 gefahren und von dem Glastafelabschnitt 33 ein entsprechendes Stück 37 abgeschnitten und weiter auf den Bearbeitungstisch 9 gefördert (Fig. 10).

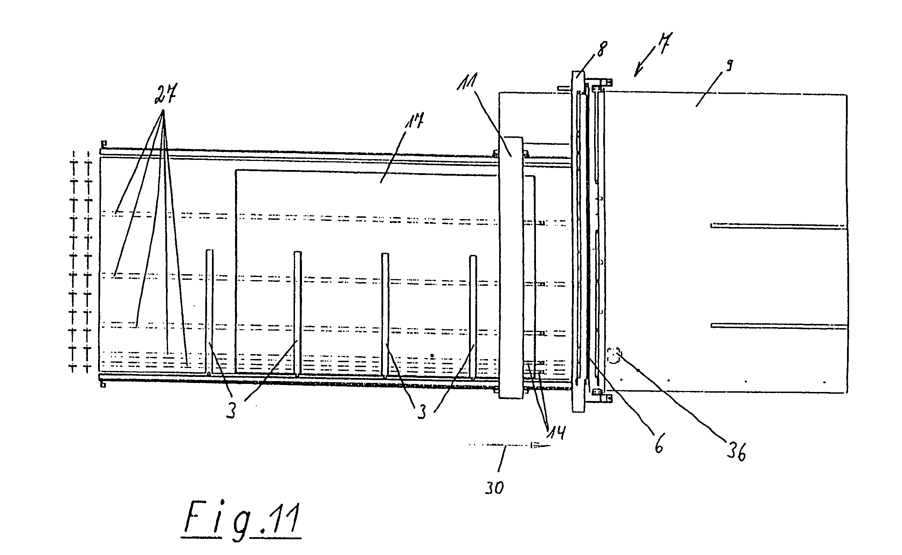

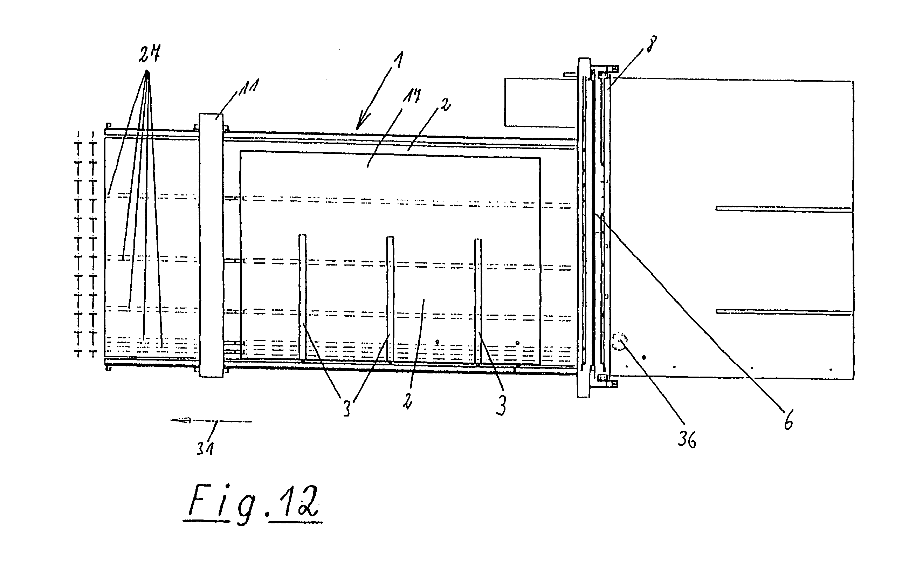

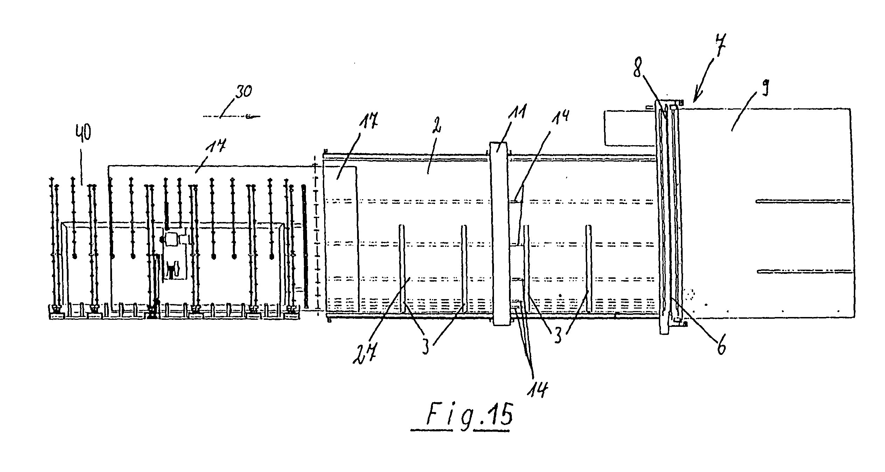

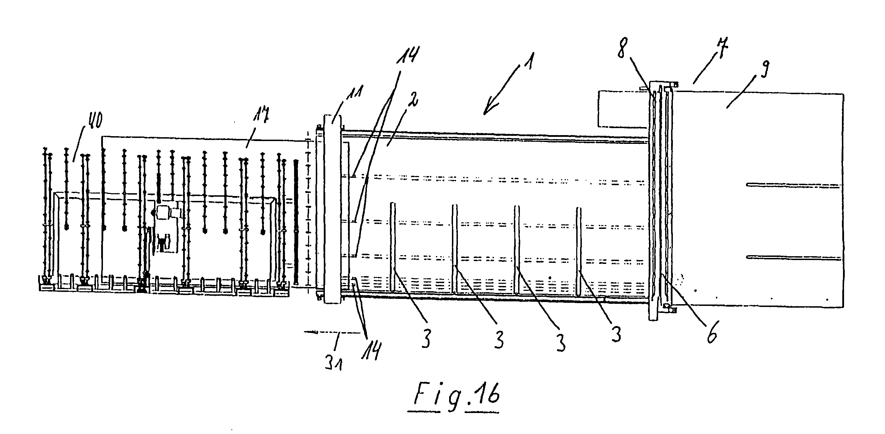

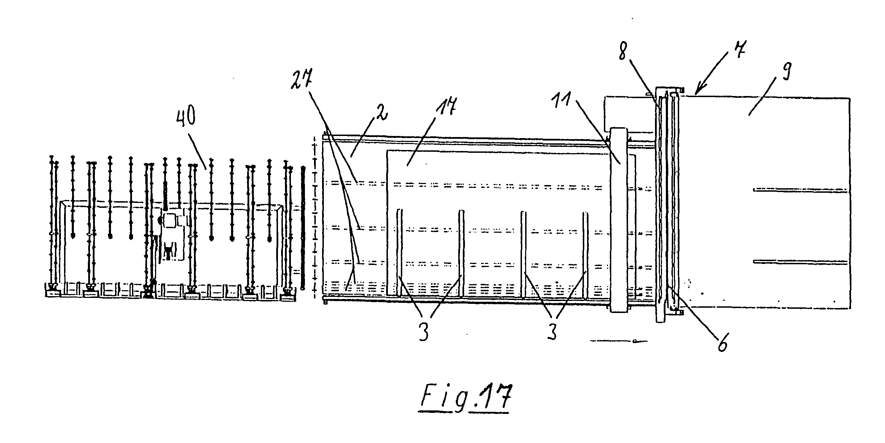

Nachdem der Glastafelabschnitt 33 in Stücke 37 zerschnitten worden ist, wird zum weiteren Zerschneiden der Glastafel 17 die Positionierbrücke 11 gegen die Förderrichtung zur Tafel 17 gefahren und die Tafel 17 mit hinteren Greifern 22 gegriffen und zur Schneidbrücke 11 entlang der Förderrichtung 30 vorgezogen (Fig. 11). Um die Glastafel 17 unter der Schneidbrücke 8 zu positionieren, wird die Positionierbrücke 11 über die Glastafel 17 in Gegenförderrichtung 31 verfahren, wobei die gesamte Greifeinrichtung 14 mit der Einrichtung 16 angehoben ist. In Gegenförderrichtung hinter der Tafel 17 wird die Greifereinrichtung wieder in die Nuten 27 abgesenkt und auf die Tafel 17 zugefahren, bis die vorderen Greifer 21 die Tafel 17 greifen (Fig. 12). Anschließend wird die Glastafel 17 entlang der Förderrichtung 30 wieder unter die Schneidbrücke 8 gefahren, bis ein gewünschtes Plattenstück auf den Bearbeitungstisch 9 hinaussteht. Einer derartigen Schneidanlage kann beispielsweise eine automatische Beschickung 40 vorgeschaltet sein, wobei die automatische Beschickung 40 beispielsweise ein Rollenförderer mit Kipparmen 40 sein kann, der über Rollen eine große Glastafel 17 auf den Luftkissenbrückentisch 2 entlang der Förderrichtung 30 auffördern kann. Die Förderung erfolgt dabei solange (Fig. 15), bis ein Teil der Glastafel 17 vom Rollenförderer 40 auf den Luftkissenbrückentisch 2 gefördert ist. Auf dem Luftkissenbrückentisch 2 (Fig. 16) wird die Positionierbrücke 8 in Gegenförderrichtung 31 auf die Tafel 17 zu verfahren, bis die Greifer 22 die Tafel 17 greifen und anschließend entlang der Förderrichtung 30 auf die Schneidbrücke 8 zu verfahren (Fig. 17).

Die Positionierung der Glastafel 17 mit dem oder den erfindungsgemäßen um die Hochachse drehbaren Greifern erfolgt in analoger Weise. Die Greifer werden lediglich um die Hochachse gedreht, um abwechselnd einen in Bezug zur Orientierung der Greifmäuler bezüglich der Schneidbrücke 8 vorderen bzw. hinteren Greifer zu bilden. Dabei ist das geöffnete Greifmaul eines vorderen Greifers der Schneidbrücke 8 zugewandt und das geöffnete Greifmaul eines hinteren Greifers der Schneidbrücke 8 abgewandt.

Bei einer weiteren vorteilhaften Ausführungsform der Erfindung sind an der Schneidbrücke sowohl ober- als auch unterseitig Schneidrädchen angeordnet, die um eine Achse normal zur Fläche der Glastafel 17 drehbar antreibbar sind. Diese Schneidrädchen sind somit in der Lage, nicht nur entlang der Schneidbrücke 8, d.h. quer zur Glastafel 17 zu schneiden, sondern können in jede Richtung schneiden. Zusammen mit der erfindungsgemäß ausgebildeten Positionierbrücke 8 können hierdurch beliebige Konturen geschnitten werden, da abhängig von der Vorschub- oder Rückzuggeschwindigkeit sowie der Vorschubgeschwindigkeit des Schneidrädchens und der Richtung des Schneidrädchens jeder beliebige Schnitt auf einer Tafel 17 durchführbar ist. Hiermit ist es somit erfindungsgemäß erstmals möglich, bei Verbundglas beliebige Konturen vollautomatisiert zu schneiden.

Bei der Erfindung ist von Vorteil, dass die Verbundglasschneidanlage eine verkürzte Baulänge aufweist, wobei durch die spezielle Ausbildung der Greifer das Zuführen einer Glasplatte zu einer Schneideinrichtung und das Wegziehen derselben von der Schneideinrichtung erheblich schneller vonstatten gehen kann, was höhere Taktzeiten erlaubt. Ferner ermöglicht die erfindungsgemäße Verbundglasschneidanlage einen einfacheren Aufbau, da auf dem Luftkissenbrückentisch keine zusätzlichen Förderer benötigt werden.

Darüber hinaus ist von Vorteil, dass bei einem um eine Achse normal zur Glasplattenfläche drehbaren Schneidrädchen in Verbindung mit einer Positionierbrücke, insbesondere rechnergesteuert jede beliebige Kontur mit Verbundglas geschnitten werden kann. Bislang wurden derartige Schnitte manuell erzeugt, wobei die Glasplatte zunächst auf einer Seite geschnitten wurde, dann gedreht wurde und dann auf der anderen Seite geschnitten wurde. Dies hatte erhebliche Ungenauigkeiten und einen sehr großen Zeitaufwand zur Folge, welche bzw. welcher mit der Erfindung vermieden wird.

## Patentansprüche

1. Vorrichtung zum Schneiden einer Verbundglastafel (17)
- mit einem Auflagetisch (2) zum Auflegen von Verbundglastafeln (17), und
- mit einer Verbundglasschneideinrichtung (7) mit Schneidwerkzeugen zum Schneiden oder Ritzen der Verbundglastafel (17)
- einer über dem Auflagetisch (2) zur Verbundglasschneideinrichtung (7) gegenläufig hin- und zurückfahrbar angeordneten Positionierbrücke (11) zum Verschieben und Positionieren der Verbundglastafel (17) auf dem Auflagetisch mit zumindest einer Greifeinrichtung (14) mit einem klemmenden Greifer, wobei
- der Greifer zwei Greifpratzen aufweist, die ein Greifmaul bilden, wobei eine untere Greifpratze beim Greifen, Verschieben und Positionieren einer Verbundglastafel (2) unterhalb des Niveaus der auf dem Auflagetisch (2) aufliegenden Verbundglastafel (17) angeordnet ist, und wobei
- der Auflagetisch (2) entlang seiner Längserstreckung fluchtend mit der Bewegungsbahn der Greifeinrichtungen (14) Nuten (27) für unter dem Niveau der Verbundglastafel (17) angeordnete Teile der Greifeinrichtungen (14) aufweist,
**dadurch gekennzeichnet, dass**
die Greifeinrichtung (14) derart ausgebildet ist, dass bezogen auf die Bewegungsrichtungen (30,31) der Positionierbrücke (11) die Verbundglastafel (17) von jeder der beiden Bewegungsrichtungen (30,31) aus greifbar ist, wobei der klemmende Greifer, bezogen auf die Auflagetischebene, derart um die Hochachse drehbar ist dass mittels dem Greifer die Verbundglastafel (17) von jeder der beiden Bewegungsrichtungen (30,31) aus greifbar ist.

2. Vorrichtung nach Anspruch 1,
**dadurch gekennzeichnet, dass**
mittels des um die Hochachse drehbaren Greifers die Verbundglastafel (17) bezogen auf die gegenläufigen Bewegungsrichtungen (30,31) der Positionierbrücke (11), sowohl an in ihrem vorderen, der Verbundglasschneidanlage (7) zugewandten Randbereich als auch an ihrem hinteren, der Verbundglasschneidanlage (7) abgewandten Randbereich greifbar ist.

3. Vorrichtung nach Anspruch 1 und/oder 2,
**dadurch gekennzeichnet, dass**
an der Positionierbrücke (11) eine Mehrzahl von Greifeinrichtungen (14) vorhanden sind.

4. Vorrichtung nach einem der vorhergehenden Ansprüche,
**dadurch gekennzeichnet, dass**
die Verbundglasschneideinrichtung (7) eine Schneidbrücke (8) besitzt, wobei an der Schneidbrücke (8) ober- und unterseitig einer zu bearbeitenden Verbundglastafel (17) zumindest je ein Schneidwerkzeug vorhanden ist, wobei die Schneidwerkzeuge um eine Achse senkrecht zur Schneidrichtung und senkrecht zur Verbundglastafelebene frei oder angetrieben drehbar sind und entlang der Schneidbrücke (8) quer zur Förderrichtung einer Verbundglastafel (17) bewegbar sind, so dass beliebige Schnittkonturen geschnitten werden können.

5. Vorrichtung nach Anspruch 3,
**dadurch gekennzeichnet, dass**
die Greifeinrichtungen (14) bezüglich der Längserstreckung der Positionierbrücke (11) mit unregelmäßigen Abständen zueinander angeordnet sind, wobei zum Greifen von unterschiedlich breiten Verbundglastafeln (17) die Abstände zwischen den Greifeinrichtungen (14) von einer Längskante (13) des Auflagetisches (2) zu einer gegenüberliegenden Längskante (12) hin weiter oder enger werden.

6. Vorrichtung nach Anspruch 5,
**dadurch gekennzeichnet, dass**
die Abstände zwischen den Greifeinrichtungen (14) auf Standardformate von Verbundglastafeln (17) abgestimmt sind.

7. Vorrichtung nach einem der vorhergehenden Ansprüche,
**dadurch gekennzeichnet, dass**
die Greifeinrichtungen (14) eine Hubeinrichtung (16) zum Anheben der Greifeinrichtung (14) über das Niveau einer Verbundglastafel (17) aufweisen, so dass die Positionierbrücke (11) mit angehobenen Greifeinrichtungen (14) die Verbundglastafel (17) überfahren kann.

8. Vorrichtung nach Anspruch 7,
**dadurch gekennzeichnet, dass**
die Hubeinrichtung (16) eine pneumatische oder hydraulische Kolbenzylindereinheit (18) oder eine elektromotorische Verstelleinrichtung aufweist, die zwischen einer Befestigungseinrichtung (19) und der übrigen Greifeinrichtung (14) angeordnet ist.

9. Vorrichtung nach einem oder mehreren der vorhergehenden Ansprüche,
**dadurch gekennzeichnet, dass**
die Greifer je eine Betätigungseinrichtung zum Öffnen und Schließen der Greifmäuler aufweisen.

10. Vorrichtung nach Anspruch 9,
**dadurch gekennzeichnet, dass**
die Betätigungseinrichtung eine pneumatiche oder hydraulische Kolbenzylindereinheit oder eine elektromotorische Stelleinheit ist.

11. Vorrichtung nach einem der vorhergehenden Ansprüche,
**dadurch gekennzeichnet, dass**
benachbart zu den Greifern an der Greifeinrichtung (14) Sensoren vorhanden sind, welche eine definierte Greiftiefe erfassen, wobei der Abstand der Sensoren zur Öffnung der Greifmäuler derart festgelegt ist, dass die Greifpratzen der Greifer eine Verbundglastafel (17) nur in entschichteten Randbereichen (29) ergreifen.

12. Vorrichtung nach einem der vorhergehenden Ansprüche,
**dadurch gekennzeichnet, dass**
dem Auflagetisch (2) eine Beschickereinheit (40) vorgeordnet angeordnet ist, mit der eine Verbundglastafel (17) auf den Auflagetisch (2) förderbar ist, bis die Verbundglastafel (17) von dem Greifer greifbar ist.

13. Verfahren zum Positionieren einer Verbundglastafel (17) auf einem Auflagetisch (2) einer Vorrichtung nach einem oder mehreren der vorhergehenden Ansprüche unter Verwendung dieser Vorrichtung,
**dadurch gekennzeichnet, dass**
die Verbundglastafel (17) zum Verschieben auf dem Auflagetisch (2) alternativ an gegenüberliegenden Kanten gegriffen und sowohl gezogen als auch geschoben wird.

14. Verfahren nach Anspruch 13,
**dadurch gekennzeichnet, dass**
die Verbundglastafel (17) nacheinander sowohl an ihrem vorderen, der Verbundglasschneidanlage (7) zugewandten Randbereich als auch an ihrem hinteren, der Verbundglasschneidanlage (7) abgewandten Randbereich gegriffen und sowohl gezogen als auch geschoben wird.

## Claims

1. A device for cutting a multilayer glass sheet (17)
- having a support table (2) for the placing of multilayer glass sheets (17) thereon, and
- having a multilayer glass cutting device (7) with cutting tools for cutting or scoring the multilayer glass sheet (17)
- a positioning bridge (11), arranged above the support table (2) so as to be movable to and fro in an opposite direction to the multilayer glass cutting device (7), for the displacement and positioning of the multilayer glass sheet (17) on the support table with at least one gripping device (14) with a clamping gripper, wherein
- the gripper has two gripping claws forming a gripping mouth, wherein upon gripping, displacement and positioning of a multilayer glass sheet (2), a lower gripping claw is arranged below the level of the multilayer glass sheet (17) resting on the support table (2), and wherein
- along its longitudinal extension and aligned with the motion path of the gripping devices (14), the support table (2) has slots (27) for parts of the gripping devices (14) arranged below the level of the multilayer glass sheet (17),
**characterised in that** the gripping device (14) is designed in such a manner that, related to the directions of motion (30, 31) of the positioning bridge (11), the multilayer glass sheet (17) can be gripped from each of the two directions of motion (30, 31), wherein the clamping gripper is, related to the support-table plane, rotatable about the vertical axis in such a manner that the multilayer glass sheet (17) can be gripped from each of the two directions of motion (30, 31) by means of the gripper.

2. A device according to claim 1, **characterised in that** by means of the gripper rotatable about the vertical axis, the multilayer glass sheet (17) is, related to the opposed directions of motion (30, 31) of the positioning bridge (11), able to be gripped at its front edge-region facing the multilayer glass cutting unit (7) and at its rear edge-region remote from the multilayer glass cutting unit (7).

3. A device according to claim 1 and/or 2, **characterised in that** a plurality of gripping devices (14) are present at the positioning bridge (11).

4. A device according to any one of the preceding claims, **characterised in that** the multilayer glass cutting device (7) has a cutting bridge (8), wherein at the cutting bridge (8) at least one cutting tool is present in each case at the upper side and the lower side of a multilayer glass sheet (17) to be worked, wherein the cutting tools are rotatable in a free or driven manner about an axis perpendicular to the cutting direction and perpendicular to the multilayer glass sheet plane and are movable along the cutting bridge (8) in a manner transverse to the conveying direction of a multilayer glass sheet (17), so that any cutting contours can be cut.

5. A device according to claim 3, **characterised in that** the gripping devices (14) are arranged at irregular distances from one another with regard to the longitudinal extension of the positioning bridge (11), wherein to grip multilayer glass sheets (17) differing in width, the distances between the gripping devices (14) become wider or narrower from one longitudinal edge (13) of the support table (2) towards an opposite longitudinal edge (12).

6. A device according to claim 5, **characterised in that** the distances between the gripping devices (14) are matched to standard formats of multilayer glass sheets (17).

7. A device according to any one of the preceding claims, **characterised in that** the gripping devices (14) have a lifting device (16) to raise the gripping device (14) above the level of a multilayer glass sheet (17), so that the positioning bridge (11) can, with raised gripping devices (14), pass over the multilayer glass sheet (17).

8. A device according to claim 7, **characterised in that** the lifting device (16) has a pneumatic or hydraulic piston-cylinder unit (18) or an electromotive adjusting device, arranged between a securing device (19) and the rest of the gripping device (14).

9. A device according to one or more of the preceding claims, **characterised in that** the grippers have a respective actuating device for opening and closing the gripping mouths.

10. A device according to claim 9, **characterised in that** the actuating device is a pneumatic or hydraulic piston-cylinder unit or an electromotive adjusting unit.

11. A device according to any one of the preceding claims, **characterised in that** sensors are present on the gripping device (14) so as to be adjacent to the grippers, which sensors detect a defined gripping depth, wherein the distance of the sensors from the opening of the gripping mouths is set in such a manner that the gripping claws of the grippers grip a multilayer glass sheet (17) only in de-coated edge regions (29).

12. A device according to any one of the preceding claims, **characterised in that** a feed unit (40) is arranged upstream of the support table (2), a multilayer glass sheet (17) being able to be conveyed onto the support table (2) by the feed unit (40) until the multilayer glass sheet (17) can be gripped by the gripper.

13. A method of positioning a multilayer glass sheet (17) on a support table (2) of a device according to one or more of the preceding claims using this device, **characterised in that** for displacement on the support table (2), the multilayer glass sheet (17) is alternately gripped at opposite edges and pulled and pushed.

14. A method according to claim 13, **characterised in that** the multilayer glass sheet (17) is successively gripped at its front edge-region facing the multilayer glass cutting unit (7) and at its rear edge-region remote from the multilayer glass cutting unit (7) and pulled and pushed.

## Revendications

1. Dispositif de découpe d'un plateau en verre feuilleté (17),
- comportant une table de support (2) pour y poser les plateaux en verre feuilleté (17), et
- comportant une unité de découpe du verre feuilleté (7) avec des outils de coupe pour découper ou entailler le plateau en verre feuilleté (17),
- un portique de positionnement (11), disposé au-dessus de la table de support (2) de manière mobile en va-et-vient dans le sens opposé par rapport à l'unité de découpe du verre feuilleté (7), et destiné à déplacer et à positionner le plateau en verre feuilleté (17) sur la table de support avec au moins un dispositif de préhension (14) avec un élément de préhension par serrage, dans lequel
- ledit élément de préhension comportant deux griffes de préhension, qui forment une mâchoire de préhension, dans lequel lorsqu'une griffe de préhension inférieure saisit, déplace et positionne un plateau en verre feuilleté (17), elle est disposée en dessous du niveau du plateau en verre feuilleté (17) posé sur la table de support (2), et dans lequel
- la table de support (2) comportant le long de son extension longitudinale, des rainures (27), alignées sur la trajectoire de déplacement des dispositifs de préhension (14), pour les parties des dispositifs de préhension (14), disposées en dessous du niveau du plateau en verre feuilleté (17),
**caractérisé en ce que**
le dispositif de préhension (14) est réalisé de telle sorte que, par rapport aux sens de déplacement (30, 31) du portique de positionnement (11), le plateau en verre feuilleté (17) peut être saisi à partir de chacun des deux sens de déplacement (30, 31), l'élément de préhension par serrage étant apte à tourner autour de l'axe vertical par rapport au plan de la table de support, de telle sorte que le plateau en verre feuilleté (17) peut être saisi par l'élément de préhension à partir de chacun des deux sens de déplacement (30, 31).

2. Dispositif selon la revendication 1,
**caractérisé en ce que**
au moyen de l'élément de préhension apte à tourner autour de l'axe vertical, le plateau en verre feuilleté (17) peut être saisi, par référence aux sens de déplacement (30, 31) opposés du portique de positionnement (11), tant au niveau de sa zone de bord avant, orientée vers l'unité de découpe du verre feuilleté (7), qu'au niveau de sa zone de bord arrière, détournée de l'unité de découpe du verre feuilleté (7).

3. Dispositif selon les revendications 1 et/ou 2,
**caractérisé en ce que**
une pluralité de dispositifs de préhension (14) sont présents au niveau du portique de positionnement (11).

4. Dispositif selon l'une quelconque des revendications précédentes,
**caractérisé en ce que**
l'unité de découpe du verre feuilleté (7) possède un portique de découpe (8), dans lequel au moins respectivement un outil de coupe est présent sur le portique de découpe (8) au niveau de la face supérieure et de la face inférieure du plateau en verre feuilleté (17) à découper, lesdits outils de coupe étant montés rotatifs, librement ou par entraînement, autour d'un axe perpendiculaire au sens de découpe et perpendiculaire au plan du plateau en verre feuilleté, et étant montés mobiles le long du portique de découpe (8) transversalement au sens de transport d'un plateau en verre feuilleté (17), de telle sorte qu'il est possible de couper n'importe quel contour de coupe.

5. Dispositif selon la revendication 3,
**caractérisé en ce que**
les dispositifs de préhension (14), par rapport à l'extension longitudinale du portique de positionnement (11), sont disposés à distances irrégulières entre eux, sachant que pour saisir des plateaux en verre feuilleté (17) de largeurs différentes, les distances entre les dispositifs de préhension (14) peuvent devenir plus larges ou plus étroites depuis un bord longitudinal (13) de la table de support (2) vers un bord longitudinal (12) situé en regard.

6. Dispositif selon la revendication 5,
**caractérisé en ce que**
les distances entre les dispositifs de préhension (14) sont ajustées à des formats standard de plateaux en verre feuilleté (17).

7. Dispositif selon l'une quelconque des revendications précédentes,
**caractérisé en ce que**
les dispositifs de préhension (14) comportent un dispositif de levage (16) pour lever le dispositif de préhension (14) au-dessus du niveau d'un plateau en verre feuilleté (17), de telle sorte que le portique de positionnement (11) avec les dispositifs de préhension (14) relevés peut passer au-dessus du plateau en verre feuilleté (17).

8. Dispositif selon la revendication 7,
**caractérisé en ce que**
le dispositif de levage (16) comporte un vérin (18) pneumatique ou hydraulique ou un dispositif de réglage à moteur électrique, qui est agencé entre un dispositif de fixation (19) et le dispositif de préhension (14) restant.

9. Dispositif selon une ou plusieurs des revendications précédentes,
**caractérisé en ce que**
les éléments de préhension comportent chacun un dispositif de manoeuvre pour ouvrir et fermer les mâchoires de préhension.

10. Dispositif selon la revendication 9,
**caractérisé en ce que**
le dispositif de manoeuvre est un vérin pneumatique ou hydraulique ou une unité de réglage à moteur électrique.

11. Dispositif selon l'une quelconque des revendications précédentes,
**caractérisé en ce que**
des capteurs sont prévus sur le dispositif de préhension (14) au voisinage des éléments de préhension, lesquels capteurs détectent une profondeur de préhension définie, la distance des capteurs par rapport à l'ouverture des mâchoires de préhension étant définie de telle sorte que les griffes de préhension des éléments de préhension saisissent un plateau en verre feuilleté (17) uniquement dans des zones de bord (29) délaminées.

12. Dispositif selon l'une quelconque des revendications précédentes,
**caractérisé en ce que**
en amont de la table de support (2) est agencée une unité de chargement (40), par laquelle un plateau en verre feuilleté (17) peut être transporté sur la table de support (2) jusqu'à ce que le plateau en verre feuilleté (17) puisse être saisi par l'élément de préhension.

13. Procédé pour le positionnement d'un plateau en verre feuilleté (17) sur une table de support (2) d'un dispositif selon une ou plusieurs des revendications précédentes, moyennant l'utilisation de ce dispositif,
**caractérisé en ce que**
le plateau en verre feuilleté (17) pour son déplacement sur la table de support (2) est saisi et est tiré ou poussé alternativement au niveau des bords face à face.

14. Procédé selon la revendication 13,
**caractérisé en ce que**
le plateau en verre feuilleté (17) peut être saisi successivement, puis tiré ou poussé tant au niveau de sa zone de bord avant orientée vers l'unité de découpe du verre feuilleté (7) qu'au niveau de sa zone de bord arrière détournée de l'unité de découpe du verre feuilleté (7).
